(19) **Europäisches Patentamt**
**European Patent Office**
**Office européen des brevets**

(11) **EP 1 849 584 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(51) Int Cl.:
***B29C 65/18*** *(2006.01)*

(21) Anmeldenummer: **06024965.3**

(22) Anmeldetag: **02.12.2006**

(54) **Verfahren zur Herstellung von Siegelwerkzeugen sowie eine Siegelstation mit nach diesem Verfahren hergestellten Siegelwerkzeugen**

Process of manufacturing sealing tools and sealing device including said manufactured tools

Procédé pour manufacturer des outils de soudage et dispositif de soudage comportant des outils manufacturé selon le procédé

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.04.2006 DE 102006020232**

(43) Veröffentlichungstag der Anmeldung:
**31.10.2007 Patentblatt 2007/44**

(73) Patentinhaber: **UHLMANN PAC-SYSTEME GmbH & Co. KG**
**88471 Laupheim (DE)**

(72) Erfinder:
• **Felk, Günter**
**89079 Ulm-Einsingen (DE)**
• **Krahl, Wolfgang**
**88471 Laupheim (DE)**

(74) Vertreter: **Wächter, Jochen et al**
**Kroher-Strobel**
**Rechts- und Patentanwälte**
**Bavariaring 20**
**80336 München (DE)**

(56) Entgegenhaltungen:
**EP-A- 1 717 013      WO-A-2006/074116**
**JP-A- 2004 000 476**

**Beschreibung**

Die Erfindung betrifft ein Verfahren zur Herstellung von Siegelwerkzeugen zum Einsatz in einer Siegelstation, insbesondere in einer Thermoformmaschine, bei der zwischen den Siegelwerkzeugen eine Mehrzahl von Folien geführt wird, wobei die Siegelwerkzeuge bei der Ausführung des Siegelvorganges Siegeltemperaturen $T_{S1}$, $T_{S2}$ aufweisen und auf deren den Folien zugewandten Seite jeweils Riffelflächen in regelmäßigem Abstand angeordnet sind, die bei Ausführung des Siegelvorganges zumindest teilweise in die Folien eintauchen. Zusätzlich betrifft die Erfindung eine Siegelstation, bei der die nach diesem Verfahren hergestellten Siegelwerkzeuge verwendet werden.

Bei der Fertigung derartiger Siegelwerkzeuge (siehe beispielsweise JP 2004 000 476), die in der Regel im Gußverfahren, im Schmiedeverfahren oder mittels CNC- Maschinen erfolgt, wird eine identische Verteilung der Riffelflächen bei Fertigungstemperatur erzeugt, wodurch untereinander austauschbare Siegelwerkzeuge entstehen.

Bei der Verwendung dieser nach diesem Herstellungsverfahren erzeugten Siegelwerkzeuge kommt es regelmäßig zu Störungen der Siegelgüte, die erst nach intensiver Analyse des Verfahrensablaufs und des Siegelbildes auf thermisch bedingte Veränderungen der Siegelwerkzeuge bei Ausführung des Siegelprozesses zurückgeführt werden konnte. Bei dem Siegelprozess wird regelhaft ein Siegelwerkzeug erhitzt, während das andere gekühlt wird. Durch diese unterschiedlichen Betriebstemperaturen weisen die Siegelwerkzeuge entsprechend ihres linearen Wärmeausdehnungskoeffizienten unterschiedliche Abstände der Riffelflächen auf, was einer kontrollierten sowie gleichmäßigen Kraft- und Wärmeeinleitung in das Werkstück entgegensteht und eine Verminderung der Siegelgüte zur Folge hat.

Der Erfindung liegt daher die Aufgabe zugrunde, ein Verfahren zur Herstellung von Siegelwerkzeugen anzugeben, das diese Nachteile nicht aufweist. Es ist weiterhin die Aufgabe, eine Siegelstation bereitzustellen, in der die nach dem erfindungsgemäßen Verfahren hergestellten Siegelwerkzeuge einsetzbar sind.

Der das Verfahren betreffende Teil der Aufgabe wird nach der Erfindung dadurch gelöst, dass, ausgehend von dem Abstand $A_{Ts1}$ der Riffelflächen des einen Siegelwerkzeuges bei dessen Siegeltemperatur, der Abstand $A_{Tf2}$ der Riffelflächen des anderen Siegelwerkzeuges bei Fertigungstemperatur dergestalt festgelegt wird, dass der Abstand $A_{Ts2}$ bei dessen Siegeltemperatur dem Abstand $A_{Ts1}$ der Riffelflächen des einen Siegelwerkzeuges entspricht.

Mit einem derartigen Herstellungsverfahren ist der Vorteil verbunden, dass die Riffelflächen der zwei in einer Siegelstation eingesetzten Siegelwerkzeuge bei Ausführung des Siegelvorgangs in exakt gleichem Abstand auf der Werkzeugoberfläche angeordnet sind, wodurch, bei zur Folienebene spiegelbildlicher Anordnung der Riffelflächen, also bei genau gegenüberliegender Ausrichtung der Riffelflächen bei den Siegelwerkzeugen, eine präzis definierte Kraft- und Wärmeeinleitung in die Folien ermöglicht wird. Im Ergebnis wird hierdurch eine Verbesserung der Siegelgüte über den gesamten Siegelbereich erreicht.

Im Rahmen der Erfindung ist es dabei besonders bevorzugt, wenn bei der Herstellung des einen Siegelwerkzeuges der Abstand $A_{Tf}$ der Riffelflächen unter Verwendung des linearen Wärmeausdehnungskoeffizienten $\alpha_2$ des Siegelwerkzeuges und eines Temperaturgradienten $\Delta T_2$, der sich aus der Differenz der Siegeltemperatur $T_{s2}$ und der Fertigungstemperatur $T_{f2}$ ergibt, gemäß der Beziehung

$$A_{Tf2} = A_{Ts2} \; / \; (\alpha_2 \; * \; \Delta T_2 + 1)$$

festgelegt wird. Hierdurch kann auf einfache Weise und unter Berücksichtigung der Fertigungstemperatur sowie der Betriebstemperatur, also der Siegeltemperatur des einen Siegelwerkzeuges, der exakte Abstand der Riffelflächen zueinander in Abhängigkeit vom funktionell korrespondierenden Siegelwerkzeug festgelegt werden.

Weiterhin bevorzugt ist es, wenn ausgehend von dem a priori festgelegten Abstand $A_{Ts1}$ der Riffelflächen des einen Siegelwerkzeuges bei dessen Siegeltemperatur, der Abstand $A_{Tf1}$ der Riffelflächen bei Fertigungstemperatur unter Verwendung des linearen Wärmeausdehnungskoeffizienten $\alpha_1$ des Siegelwerkzeuges und eines Temperaturgradienten $\Delta T_1$ der sich aus der Differenz der Siegeltemperatur $T_{s1}$ und der Fertigungstemperatur $T_{f1}$ ergibt, gemäß der Beziehung

$$A_{Tf1} = A_{Ts1} \; / \; (\alpha_1 \; * \; \Delta T_1 + 1)$$

festgelegt wird. Dies bietet den Vorteil, dass die Formgebung des herzustellenden Siegelwerkzeuges an den Erfordernissen der Siegelfläche ausgerichtet wird und überdies für jede Betriebstemperatur der Siegelwerkzeuge ein entsprechendes Siegelwerkzeug verfügbar gemacht werden kann.

Der die Siegelstation betreffende Teil der Aufgabe wird dadurch gelöst, dass in der Siegelstation die Siegelwerkzeuge auf dem zugeordneten Werkzeugträger an einer Stelle befestigt und/oder an einer Mehrzahl von Stellen geführt sind. Diese Befestigungsarten gewährleisten eine ungehinderte und gleichmäßige Wärmeausdehnung des Werkzeugs, gewährleisten dadurch eine regelmäßige Anordnung der Riffelflächen auf den Siegelwerkzeugen unabhängig von deren Temperatur und ermöglichen die Ausnutzung der Vorteile, die sich aus der besonderen Herstellung der Siegelwerkzeuge ergeben.

Weiterhin ist vorgesehen, dass die Riffelflächen der Siegelwerkzeuge spiegelbildlich zur Folienebene angeordnet sind. Hierdurch wird eine präzise Kraft- und Wärmeeinleitung an definierten Stellen der Folien und somit ein hochpräzises Siegelbild ermöglicht.

Darüber hinaus ist vorgesehen, dass zumindest die Lage eines Siegelwerkzeuges in der Ebene des zugeordneten Werkzeugträgers feinjustierbar ist. Diese Feinjustierung erlaubt bei Erreichen der Siegeltemperatur die exakt spiegelbildliche Ausrichtung der Riffelflächen der beiden Siegelwerkzeuge zueinander. Zudem wird eine Nachjustierung der Riffelflächen ermöglicht, so dass diese Ausrichtung auch während des Betriebes gewährleistet bleibt.

Im folgenden wird die Erfindung an einem in der Zeichnung dargestellten Ausführungsbeispiel näher erläutert; es zeigen

Fig. 1    eine schematische Darstellung eines Querschnitts der Siegelwerkzeuge bei Ausführung des Siegelvorgangs,

Fig. 2    eine schematische Darstellung eines Querschnitts der erfindungsgemäß hergestellten Siegelwerkzeuge bei Fertigungstemperatur,

Fig. 3    eine der Figur 2 entsprechende Darstellung bei Erreichen der jeweiligen Siegeltemperatur, und

Fig. 4    eine der Figur 1 entsprechende Darstellung bei Versatz der gegenseitigen Riffelausrichtung der beiden Siegelwerkzeuge.

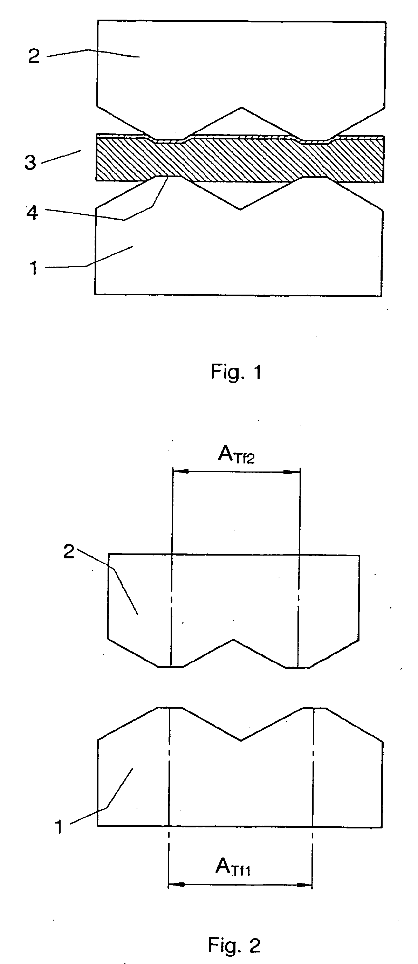

Die Erfindung betrifft ein Verfahren zur Herstellung von Siegelwerkzeugen 1, 2 zum Einsatz in einer Siegelstation, insbesondere in einer Thermoformmaschine, bei der zwischen den Siegelwerkzeugen 1, 2 eine Mehrzahl von Folien 3 geführt wird. Das eine Siegelwerkzeug 1 weist bei der Ausführung des Siegelvorgangs die Siegeltemperatur $T_{S1}$ auf, das andere 2 die Temperatur $T_{s2}$, wobei in der Praxis zur Ausführung des Siegelvorganges regelhaft die Temperatur eines Siegelwerkzeuges deutlich erhöht und die des anderen abgesenkt wird. Auf der den Folien zugewandten Seite sind bei beiden Siegelwerkzeugen Riffelflächen 4 angeordnet. Wie insbesondere aus Figur 2 ersichtlich, sind die Riffelflächen des einen Siegelwerkzeuges 1 bei Fertigungstemperatur im Abstand $A_{Tf1}$ zueinander angeordnet, die Riffelflächen des anderen Siegelwerkzeuges 2 im Abstand $A_{Tf2}$. Aus Gründen der Veranschaulichung seien die Siegelwerkzeuge 1, 2 bei gleicher Temperatur $T_{f1}$ und $T_{f2}$ gefertigt. Eine Fertigung bei signifikant unterschiedlichen Temperaturen müsste dementsprechend bei der Auslegung des Abstandes der Riffelflächen berücksichtigt werden. Diese Riffelflächen 4 tauchen, wie in Figur 1 gezeigt, bei Ausführung des Siegelvorgangs zumindest teilweise in die Folien 3 ein. Hierbei entspricht die Summe der Eintauchtiefen der Riffelflächen 4 des einen Siegelwerkzeuges 1 und des anderen Siegelwerkzeuges 2 dem Toleranzausgleich. Je tiefer die Riffelflächen 4 in die Folien 3 eintauchen, desto stärker kann die Ebenheit der Siegelwerkzeuge 1, 2 und die Dicke der Folien 3 variieren. Ausgehend von dem Abstand $A_{Ts1}$ der Riffelflächen des einen Siegelwerkzeuges 1 bei dessen Siegeltemperatur wird der Abstand $A_{Tf1}$ der Riffelflächen des anderen Siegelwerkzeuges 2 bei Fertigungstemperatur derart festgelegt, dass der Abstand $A_{Ts2}$ bei dessen Siegeltemperatur dem Abstand $A_{Ts1}$ der Riffelflächen 4 des einen Siegelwerkzeuges 1 entspricht.

Erfindungsgemäß kann zur Herstellung des anderen Siegelwerkzeuges 2 der Abstand $A_{Tf2}$ der Riffelflächen 4 unter Verwendung des linearen Wärmeausdehnungskoeffizienten $\alpha_2$ des Siegelwerkzeuges 2 und eines Temperaturgradienten $\Delta T_2$ der sich aus der Differenz der Siegeltemperatur $T_{s2}$ und der Fertigungstemperatur $T_F$ ergibt, gemäß der Beziehung

$$A_{Tf} = A_{Ts2} \; / \; (\alpha_2 \; * \; \Delta T_2 \; +1)$$

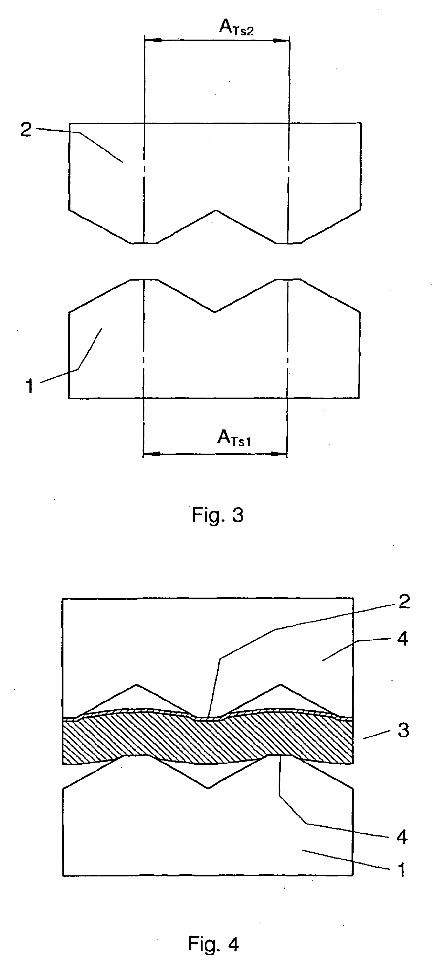

festgelegt wird. Die Figuren 2 und 3 lassen erkennen, dass der Abstand der Riffelflächen des Siegelwerkzeuges 2 beim Übergang vom kalten Zustand zur im Ausführungsbeispiel höher veranschlagten Siegeltemperatur aufgrund der Wärmeausdehnung zunimmt, so dass das hergestellte Siegelwerkzeug 2 bei Ausführung des Siegelvorgangs einen identischen Abstand der Riffelflächen 4 zu dem Abstand der Riffelflächen 4 des korrespondierenden Siegelwerkzeuges 1 aufweist.

Für dieses Verfahren ist es nicht notwendigerweise erforderlich, den Abstand der Riffelflächen 4 des einen Siegelwerkzeuges 1 bei Siegeltemperatur messtechnisch zu erfassen, vielmehr kann erfindungsgemäß auch der Abstand $A_{Ts1}$ der Riffelflächen 4 des einen Siegelwerkzeuges 1 a priori festgelegt werden und, von diesem ausgehend, der Abstand $A_{Tf2}$ der Riffelflächen 4 bei Fertigungstemperatur unter erneuter Verwendung des linearen Wärmeausdeh-

nungskoeffizienten $\alpha_1$ des Siegelwerkzeuges 1 und des Temperaturgradienten $\Delta T_1$, der sich aus der Differenz der Siegeltemperatur $T_{s1}$ und der Fertigungstemperatur TF ergibt, gemäß der Beziehung

$$A_{Tf} \;=\; A_{Ts1} \;/\; (\alpha 1 * \Delta T_1 + 1)$$

festgelegt werden. Hierdurch ist es auf besonders einfache Weise möglich, hinsichtlich der Riffelflächenabstände aufeinander abgestimmte Siegelwerkzeuge 1, 2 für die jeweiligen Siegeltemperaturen $T_{s1}$, $T_{s2}$ der Siegelwerkzeuge 1,2 herzustellen.

Hinsichtlich der Wärmeausdehnung ist es für den Erhalt eines gleichmäßigen Abstandes der Riffelflächen 4 zueinander erforderlich, dass die Siegelwerkzeuge 1, 2 in der Siegelstation auf dem zugeordneten Werkzeugträger, der in der Zeichnung nicht näher dargestellt ist, derart befestigt sind, dass eine ungehinderte und gleichmäßige Ausdehnung respektive Schrumpfung des Materials in alle Richtungen erfolgen kann. Dies ist bei der erfindungsgemäßen 1-Punkt Befestigung und/ oder der Führung an einer Mehrzahl von Punkten erfüllt.

Für ein homogenes Siegelbild ist es darüber hinaus essentiell, dass die Riffelflächen 4 der beiden Siegelwerkzeuge 1, 2 zur Folienebene spiegelbildlich ausgerichtet sind. Hierdurch stehen die Riffelflächen der beiden Siegelwerkzeuge 1, 2 an jeder Stelle der Folien 3 in gleicher Position zueinander, wodurch sich eine räumlich definierte Kraft- und Wärmeeinleitung an vergleichbaren Stellen der Folien 3 ergibt. Dies ist für eine optimale Siegelgüte, wie sie insbesondere bei der Siegelung von Blisterpackungen und anderen Verpackungen für Arzneimittelprodukte erforderlich ist, unabdingbar. Die Geometrie der Riffelflächen kann dabei pyramidenförmig oder kegelförmig mit stumpfen Endflächen, kugelförmig oder dergleichen ausgestaltet sein.

Wie aus Figur 4 zu entnehmen ist, ist die erfindungsgemäße Herstellung von Siegelwerkzeugen 1, 2, die bei Ausführung des Siegelvorgangs ein Riffelflächenmuster mit identischen Abständen der Riffelflächen 4 aufweisen, für die spiegelbildliche Anordnung der Riffelflächen 4 hinsichtlich der Folienebene nicht ausreichend. Hierzu ist eine in der Zeichnung nicht näher dargestellte Vorrichtung vorgesehen, die es erlaubt, zumindest die Lage eines Siegelwerkzeuges 1, 2 in der Ebene des zugeordneten Werkzeugträgers fein zu justieren. Diese Justierung kann hierbei mittels Stellschrauben, piezoelektrisch, hydraulisch oder mittels einer vergleichbaren Vorrichtung erfolgen.

**Patentansprüche**

1. Verfahren zur Herstellung von Siegelwerkzeugen (1, 2) zum Einsatz in einer Siegelstation, insbesondere in einer Thermoformmaschine, bei der zwischen den Siegelwerkzeugen eine Mehrzahl von Folien (3) geführt wird, wobei die Siegelwerkzeuge (1, 2) bei der Ausführung des Siegelvorganges Siegeltemperaturen $T_{S1}$, $T_{S2}$ aufweisen und auf deren den Folien zugewandten Seite jeweils Riffelflächen (4) in regelmäßigem Abstand angeordnet sind, die bei Ausführung des Siegelvorganges zumindest teilweise in die Folien (3) eintauchen, **dadurch gekennzeichnet, dass**, ausgehend von dem Abstand $A_{Ts1}$ der Riffelflächen des einen Siegelwerkzeuges (1) bei dessen Siegeltemperatur, der Abstand $A_{Tf2}$ der Riffelflächen des anderen Siegelwerkzeuges (2) bei Fertigungstemperatur dergestalt festgelegt wird, dass der Abstand $A_{Ts2}$ bei dessen Siegeltemperatur dem Abstand $A_{Ts1}$ der Riffelflächen des einen Siegelwerkzeuges (1) entspricht.

2. Verfahren nach Anspruch 1, **dadurch gekennzeichnet, dass** zur Herstellung des anderen Siegelwerkzeuges (2) der Abstand $A_{Tf2}$ der Riffelflächen (4) unter Verwendung des linearen Wärmeausdehnungskoeffizienten $\alpha_2$ des Siegelwerkzeuges (2) und eines Temperaturgradienten $\Delta T_2$, der sich aus der Differenz der Siegeltemperatur $T_{s2}$ und der Fertigungstemperatur $T_{f2}$ ergibt, gemäß der Beziehung

$$A_{Tf2} \;=\; A_{Ts2} \;/\; (\alpha_2 \;*\; \Delta T_2 + 1)$$

festgelegt wird.

3. Verfahren nach Anspruch 1 und 2, **dadurch gekennzeichnet, dass**, ausgehend von dem a priori festgelegten Abstand $A_{Ts1}$ der Riffelflächen (4) des einen Siegelwerkzeuges (1) bei dessen Siegeltemperatur, der Abstand $A_{Tf1}$ der Riffelflächen (4) bei Fertigungstemperatur unter Verwendung des linearen Wärmeausdehnungskoeffizienten $\alpha_1$ des Siegelwerkzeuges (1) und eines Temperaturgradienten $\Delta T_1$, der sich aus der Differenz der Siegeltemperatur $T_{s1}$ und der Fertigungstemperatur $T_{f1}$ ergibt, gemäß der Beziehung

$$A_{Tf1} = A_{Ts1} / (\alpha_1 * \Delta T_1 + 1)$$

festgelegt wird.

## Claims

1. Method for making sealing tools (1, 2) for use in a sealing station, in particular in a thermoforming machine, in which a plurality of films (3) are guided between the sealing tools, the sealing tools (1, 2) having sealing temperatures $T_1$ and $T_2$ during the sealing process, and ridges being arranged at regular intervals on the side thereof facing the films and being at least partially immersed in the films (3) during the sealing process, **characterised in that** based on the spacing $A_{Ts1}$ of the ridges of one sealing tool (1) at the sealing temperature of this tool, the spacing $A_{Tf2}$ of the ridges of the other sealing tool (2) at the manufacturing temperature is calculated such a way that the spacing $A_{Ts2}$ at the sealing temperature thereof corresponds to the spacing $A_{TS1}$ of the ridges of the first sealing tool (1).

2. Method according to claim 1, **characterised in that** the spacing $A_{Tf2}$ of the ridges (4) for making the other sealing tool (2) is determined using the linear thermal expansion coefficient $\alpha_2$ of the sealing tool (2) and a temperature gradient $\Delta T_2$ calculated from the difference between the sealing temperature $T_{s2}$ and the manufacturing temperature $T_{f2}$, based on the formula:

$$A_{Tf2} = A_{Ts2} / (\alpha_2 * \Delta T_2 + 1).$$

3. Method according to claims 1 and 2, **characterised in that**, based on the predetermined spacing $A_{Ts1}$ of the ridges (4) of one sealing tool (1) at its sealing temperature, the spacing $A_{Tf1}$ of the ridges (4) at the manufacturing temperature is determined using the linear thermal expansion coefficient $\alpha_1$ of the sealing tool (1) and a temperature gradient $\Delta T_1$ calculated from the difference between the sealing temperature $T_{s1}$ and the manufacturing temperature $T_{f1}$, based on the formula:

$$A_{Tf1} = A_{Ts1} / (\alpha_1 * \Delta T_1 + 1).$$

## Revendications

1. Procédé de fabrication d'outils de scellement (1, 2) destinés à être utilisés dans un poste de scellement, en particulier dans une machine de thermoformage, dans laquelle une pluralité de feuilles (3) sont guidées entre les outils de scellement, les outils de scellement (1, 2) présentant des températures de scellement $T_{S1}$, $T_{S2}$ lors de la réalisation de l'opération de scellement et des surfaces cannelées (4) étant respectivement disposées à distance régulière sur leur côté tourné vers les feuilles, lesquelles surfaces plongent, au moins en partie, dans les feuilles (3) lors de la réalisation de l'opération de scellement, **caractérisé en ce que**, à partir de l'écartement $A_{TS1}$ des surfaces cannelées de l'un des outils de scellement (1), à la température de scellement de ce dernier, l'écartement $A_{Tf2}$ des surfaces cannelées de l'autre outil de scellement (2), à la température de fabrication, est défini de telle sorte que l'écartement $A_{TS2}$, à la température de scellement de ce dernier, correspond à l'écartement $A_{TS1}$ des surfaces cannelées de l'un des outils de scellement (1).

2. Procédé suivant la revendication 1, **caractérisé en ce que**, pour la fabrication de l'autre outil de scellement (2), l'écartement $A_{Tf2}$ des surfaces cannelées (4) est défini en utilisant le coefficient linéaire de dilatation thermique $\alpha_2$ de l'outil de scellement (2) et un gradient de température $\Delta_{T2}$, qui résulte de la différence entre la température de scellement $T_{S2}$ et la température de fabrication $T_{f2}$, suivant la relation

$$A_{Tf2} = A_{TS2} / (\alpha_2 * \Delta_{T2} + 1)$$

**3.** Procédé suivant les revendications 1 et 2, **caractérisé en ce que**, à partir de l'écartement $A_{TS1}$, défini a priori, des surfaces cannelées (4) de l'un des outils de scellement (1) à la température de scellement de ce dernier, 1 l'écartement $A_{Tf1}$ des surfaces cannelées (4), à la température de fabrication, est défini en utilisant le coefficient linéaire de dilatation thermique $\alpha_1$ de l'outil de scellement (1) et un gradient de température $\Delta_{T1}$, qui résulte de la différence entre la température de scellement $T_{S1}$ et la température de fabrication $T_{f1}$, suivant la relation

$$A_{Tf1} = A_{TS1} / (\alpha_1 * \Delta_{T1} + 1)$$

Fig. 1

Fig. 2

Fig. 3

Fig. 4

**EP 1 849 584 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004000476 B